# EUROPEAN PATENT SPECIFICATION

(11) **EP 3 063 559 B1**
(45) Date of publication and mention of the grant of the patent: **12.09.2018**
(21) Application number: 14812605.5
(22) Date of filing: 29.10.2014
(51) Int. Cl.: G01T 1/208, G01T 1/24

(54) **SOLID-STATE PHOTOMULTIPLIER DEVICE WITH HIGH SPATIAL RESOLUTION AND CONTROL METHOD FOR SAID PHOTOMULTIPLIER DEVICE.**
FESTKÖRPER PHOTOVERVIELFACHER MIT HOHER RÄUMLICHER AUFLÖSUNG UND VERFAHREN ZUR STEUERUNG DAVON
DISPOSITIF PHOTOMULTIPLICATEUR À L'ÉTAT SOLIDE DE HAUTE RESOLUTION SPATIALE ET PROCÉDÉ DE COMMANDE DU MÊME

(30) Priority: 30.10.2013 IT VI20130266
(43) Date of publication of application: 07.09.2016
(73) Proprietor: Fondazione Bruno Kessler, 38122 Trento (IT)
(72) Inventor: PIEMONTE, Claudio, I-38057 Pergine Valsugana (TN) (IT); GOLA, Alberto, I-38123 Trento (IT)
(74) Representative: Marchioro, Paolo
(86) International application number: PCT/IB2014/065694
(87) International publication number: WO 2015/063704

(56) References cited:
- US-A1- 2010 243 865
- ANTONIO J GONZALEZ ET AL: "Simulation Study of Resistor Networks null Applied to an Array of 256 SiPMs", IEEE TRANSACTIONS ON NUCLEAR SCIENCE, IEEE SERVICE CENTER, NEW YORK, NY, US, vol. 60, no. 2, 1 April 2013 (2013-04-01), pages 592-598, XP011499698, ISSN: 0018-9499, DOI: 10.1109/TNS.2012.2226051
- R. GRASSO ET AL: "New bi-dimensional SPAD arrays for time resolved single photon imaging", NUCLEAR INSTRUMENTS AND METHODS IN PHYSICS RESEARCH SECTION A: ACCELERATORS, SPECTROMETERS, DETECTORS AND ASSOCIATED EQUIPMENT, vol. 718, 1 August 2013 (2013-08-01), pages 566-568, XP055093493, ISSN: 0168-9002, DOI: 10.1016/j.nima.2012.11.136
- DAVID STRATOS ET AL: "Comparison of three resistor network division circuits for the readout of 4x4 pixel SiPM arrays", NUCLEAR INSTRUMENTS AND METHODS IN PHYSICS RESEARCH SECTION A: ACCELERATORS, SPECTROMETERS, DETECTORS AND ASSOCIATED EQUIPMENT, vol. 702, 1 February 2013 (2013-02-01), pages 121-125, XP055121745, ISSN: 0168-9002, DOI: 10.1016/j.nima.2012.08.006

## Description

The present invention relates to a solid-state photomultiplier device with high spatial resolution that enables the accurate determination of the position of impact of one or more photons on the sensitive surface of said device.

The invention also concerns a method for controlling said photomultiplier device with high spatial resolution that enables the accurate determination of the position of impact.

It is known that many fields of application require the detection of very low intensity light. In the medical field, for example, said need can be observed in the equipment for the application of the technique known as positron emission tomography (PET), by means of which it is possible to obtain bio-images that allow the creation of maps of the functional processes within the human body.

In particular, this technique involves the administration of a radiopharmaceutical containing a radioactive isotope to the patient under examination which, following a process of decay, emission of positrons and annihilation of the latter with electrons, causes the emission of two photons in opposite directions.

Said photons, on reaching a scintillator material placed in the scanning device, generate a flash of light that is detected by said photomultiplier devices.

Incidentally, it is important to note that in this case the term "photomultiplier devices" means exclusively solid-state photomultipliers, which include, among others, the so-called "silicon photomultiplier" or "SiPM" in technical jargon.

These photomultiplier devices comprise a plurality of light sensitive microcells usually arranged as a matrix on a single semiconductor substrate. Each one of said light sensitive microcells comprises a reversely polarized avalanche photodiode that responds independently of the others, emitting an elementary charge packet in the moment when a photon is detected. Each light sensitive microcell furthermore comprises a quenching circuit that is connected to the photodiode in series and is suited to quench said avalanche effect that was established in the same photodiode following the impact of a photon on its sensitive surface.

Returning to the particular application related to positron emission tomography (PET), as in other additional applications, the aim is to "count" the number of photons in each flash of light generated by the scintillator and usually also establish, as precisely as possible, the instant of arrival of the high energy particle. In addition, in many PET applications, such as for example the use of PET on small subjects, such as small animals or specific organs of the human body, including the heart or brain, it is equally important to establish as precisely as possible, the position in which the aforesaid photons impact the sensitive surface of said photomultiplier devices. In this way it is possible to obtain high spatial resolution bio-images, even in the presence of particularly low light intensity.

From the manufacturing standpoint, it is known that to achieve such high spatial resolution when using segmented scintillators, it is necessary to reduce the size of the pixels of the latter. To identify the pixels of the scintillator the particle has interacted with, it is equally important to use an array of photomultiplier devices in which each element of the array has a small size, up to a size equal to those of the individual pixels of the scintillator, in the case of what is called 1:1 coupling in technical jargon. In general, the smaller the pixels of the scintillator, the smaller the pitch of the elements of the photomultiplier device array must be. Consequently, according to the prior art, such devices must be provided with a large number of output channels to allow the independent removal of the charge generated by each element of the photomultiplier device array, after the impact of a photon in one of the elements of the scintillators array.

Even if using continuous scintillators, the spatial resolution can be increased by decreasing the pitch of the elements of the photomultiplier device array used to read the light and consequently also increasing the number of output channels.

However, this implementation, which in particular requires a high number of output channels available, leads to some significant drawbacks, including the increase in constructive complexity and, consequently, the cost of the photomultiplier devices together with a greater complexity, cost and power consumption of the electronics that is necessary to manage the same devices. It is also known that in order to overcome these drawbacks, some photomultiplier architectures have been developed and as known as "position-sensitive" ("position sensitive SiPM" or PS-SiPM) which can be grouped by the fact that they comprise a limited number of output channels, typically four. Despite this, with the use of these PS-SiPM devices, it is possible to extract the information necessary and sufficient to accurately determine the point of impact of one or more photons on their sensitive surface, and therefore to identify the pixels of the scintillator the particle has interacted with.

In particular, the prior art includes two main types of "position-sensitive" photomultiplier devices, in technical jargon called "light-sharing PS-SiPM" and "charge sharing PS-SiPM" respectively.

In addition, the literature on the matter includes two different photomultiplier devices of the "light-sharing PS-SiPM" type, respectively known by the acronyms SeSP ("Sensitivity encoded Silicon Photomultipliers") and iSiPM ("interpolating SiPM").

For both of these types of "light-sharing" photomultiplier devices the aforementioned plurality of light sensitive microcells located on the semiconductor substrate, is divided into sub-groups, where the light sensitive microcells of each sub-group are distributed in the semiconductor substrate with a pre-established logic and are connected in parallel to each other. Furthermore, each sub-group is connected to an output channel independent from the output channels of the other sub-groups.

This "light-sharing" approach enables the determination of the position of impact on the sensitive surface of the photomultiplier device of multiple photons, as a function of the amplitudes of the signals extracted by the aforementioned output channels. In fact, the amplitude of the signals generated in each of these output channels is proportional to the number of photons impacting the light sensitive microcells belonging to the relative sub-group.

In particular, in the typical application of the light-sharing approaches, the photons impact on a portion of the detector's active area, like for example, the base of the scintillator crystal that generated the flash of light. In this case the position calculated from the signals generated by the position-sensitive photomultiplier device will be the barycenter of this portion of the active area.

As regards, in particular, two dimension SeSP devices, by which it is possible to determine both X and Y Cartesian coordinates of the position of impact, the plurality of light sensitive microcells is divided into four sub-groups, all having the same number of light sensitive microcells and each of which is connected to an output channel independent from the others.

Two of these sub-groups, which we will call X sub-groups, have their light sensitive microcells distributed according to a first direction along the X axis, while the remaining two sub-groups, which we will call Y sub-groups, have their light sensitive microcells distributed according to a first direction along the Y axis. To implement this distribution in this type of SeSP device, the matrix of light sensitive microcells is subdivided into a number *n* of sub-matrices, one adjacent to the other, usually in a square layout having the same size of the pixel section of the scintillator to be read. In addition, the configuration of all sub-matrices usually have the same number of light sensitive microcells.

A portion, usually half, of the light sensitive microcells of each sub-matrix is distributed between the X sub-groups, and the other half between the two Y sub-groups. Considering the two X sub-groups, the distribution of light sensitive microcells of each of them varies from one sub-matrix to another respectively in a gradually increasing manner and in a gradually decreasing manner along the X axis. In a similar way, with respect to the two Y sub-groups, the distribution of light sensitive microcells of each of them varies from one sub-matrix to another respectively in a gradually increasing manner and in a gradually decreasing manner along the Y axis.

In particular, in the case of a segmented scintillator, it can be assumed as a general approximation, that the photons produced in one of these flashes of light are evenly distributed on the sensitive surface of the photomultiplier device placed under the pixel of the scintillator that generated the flash of light. In this case a different distribution of the signal between the different output channels is obtained depending on the position of the pixel of the scintillator that generated the flash of light, enabling the identification of the different pixels and obtaining what is called, in technical jargon, "position encoding". Inherently this technique is not applicable to single photons, since it presupposes a division of the photons detected by the sub-groups of light sensitive microcells.

To determine the X and Y coordinates of the point of incidence of the photons a center of mass algorithm is usually used. For example, the value of the X coordinate is calculated by the difference between the amplitudes of the signals extracted from the two output channels of the X sub-groups. This difference is then normalized with respect to the sum of these two signals, which represents the portion of energy generated by the impact of photons and absorbed by the microcells of both X sub-groups.

Disadvantageously, as noted, the SeSP approach does not allow a linear distribution of the light sensitive microcells of each sub-group on the entire photomultiplier device to be obtained.

Consequently, the SeSP has the drawback of being extremely sensitive to any misalignment between the scintillator pixels and the sub-matrices of light sensitive microcells in which the sensitive surface of the device is divided. Consequently, in the event in which there is not perfect alignment between the above two elements, significant distortions occur in the calculated values for the X and Y coordinates of the point of impact of the photons.

As regards the second type of iSiPM photomultiplier devices, their sensitive surface is also divided into four sub-groups of mutually independent light sensitive microcells. However, unlike SeSP devices, the light sensitive microcells of iSiPM devices are distributed on the semiconductor substrate according to a random algorithm that approximates a graded density function in a linear manner between the four output channels, which usually have their contact electrodes in the four corners of the same semiconductor substrate.

In this case, the X and Y coordinates of the point of impact of the photons are determined by combining the signals extracted from all four output channels, with substantially the same method used for SeSP devices. In particular, if A, B, C and D are the four output channels starting from the one connected to the electrode at the bottom left and rotating counterclockwise, the X coordinate is determined by ((A+D)-(B+C))/((A+B+C+D) and Y by ((A+B)-(C+D))/((A+B+C+D).

Advantageously, this type of iSiPM device is less sensitive than SeSP devices when a misalignment or rotation between its sensitive surface and the scintillator occurs.

In general, with the photomultiplier devices that implement the "light-sharing" mode, the output signal extracted by each of the output channels should ideally be proportional to the number of light sensitive microcells allocated to the various sub-groups present in the portion of active area of the device illuminated by the flash of light to be detected. For example, in the case of the segmented scintillator with a 1:1 coupling, this portion is equal to the section of the scintillator pixel in which the particle has interacted. However, in practice, in these devices there is statistical noise in the distribution of the photons detected between the four sub-groups of microcells, due to the fact that the detection of the photons of a flash of light is a random process in a first approximation of a Poisson type. Disadvantageously, this noise results in a reduction of the spatial resolution of these photomultiplier devices. Consequently, the use of this type of photomultiplier devices can be critical and not suitable in particular situations in which the light intensity to be detected is particularly low, and therefore, higher rates of statistical fluctuations, as for example in the so-called SPECT ("Single Photon Emission Computed Tomography") applications.

Additionally, these devices are not suitable for detecting the position of a number of photons comparable to or less than the number of output channels, and in particular, for the detection of the position of a single photon.

In contrast as regards the aforementioned "charge sharing" mode devices, their implementation involves the connection of each light sensitive microcell to four output channels, independent from each other, by means of a two dimension resistive network connected to individual light sensitive microcells or groups of light sensitive microcells connected in parallel to each other.

With this approach, each of the X and Y coordinates is calculated by combining all four signals extracted from the aforementioned output channels according to an algorithm of known type.

As for iSiPM photomultiplier devices, also these devices based on the "charge sharing" approach are not very sensitive when the misalignment of its sensitive surface with respect to the scintillator pixels occurs.

These devices can also, at least in theory, provide information on the position of interaction of a single photon.

In the event multiple photons are detected, similar to the light-sharing devices, charge-sharing devices provide an average of the positions of impact of the photons pertaining to the flash of light as position of said flash of light.

However, disadvantageously, the latter type of photomultiplier devices has an inherent distortion problem known in the field as the "pincushion distortion". In fact, one cause of that distortion may be, among other things, the presence of parasitic capacitances in the aforementioned resistive network and the fact that the signals extracted from the four output channels used to determine the individual X and Y coordinates are all inter-related.

This distortion may be compensated for, at least in part, but not without complicating the process to determine the optimum value of each resistor of the distributed resistance network.

A further drawback of the "charge sharing" photomultiplier devices consists in the fact that, due to the interaction of the resistive network with the parasitic capacitances to earth of the network itself and the connection lines, the filtered output signal is typically low and slow, resulting in a temporal resolution which is worse than a standard photomultiplier device.

The document by Antonio J Gonzalez et al.: "Simulation Study of Resistor Networks Applied to an Array of 256 SiPMs", in IEEE TRANSACTIONS ON NUCLEAR SCIENCE, vol. 60, no. 2, published on 1 April 2013, discloses a device according to the prior art discussed above.

The present invention intends to overcome these drawbacks.

In particular, the object of the invention is to provide a photomultiplier device able to accurately determine the position of impact of one or more photons on its sensitive surface, while simultaneously comprising a limited number of output channels.

Therefore, the object of the invention is to provide a photomultiplier device with high spatial resolution and limited constructive and operational complexity. Another object of the invention is to provide a photomultiplier device in which the distortions of the signals due to its intrinsic characteristics are reduced, if not absent.

A further objective of the invention is to provide a photomultiplier device with high spatial resolution with no or low sensitivity to possible misalignments between the scintillator and the sensitive surface of the device itself.

Yet another object of the invention is to provide a position-sensitive photomultiplier device, able to generate signals with fast rising edges comparable to those of a non position-sensitive SiPM device, so as to provide high temporal resolution.

The objects above are achieved by a photomultiplier device having the features according to claim 1. Further advantageous embodiments of the invention are listed in the dependent claims.

The objects and advantages will be better highlighted in the description of the invention provided below by way of non-limiting examples making reference to the accompanying drawings wherein:
- Fig. 1 shows a portion of the circuit diagram of a first embodiment of the photomultiplier device of the invention;
- Fig. 2 shows a topographic view of the embodiment of the photomultiplier device of Figure 1;
- Fig. 3 shows a topographic view of a current divider pertaining to the photomultiplier device of the invention;
- Fig. 4 shows a portion of the circuit diagram of a second preferred embodiment of the photomultiplier device of the invention;
- Fig. 5 shows a topographic view of the embodiment of the photomultiplier device of Figure 4.

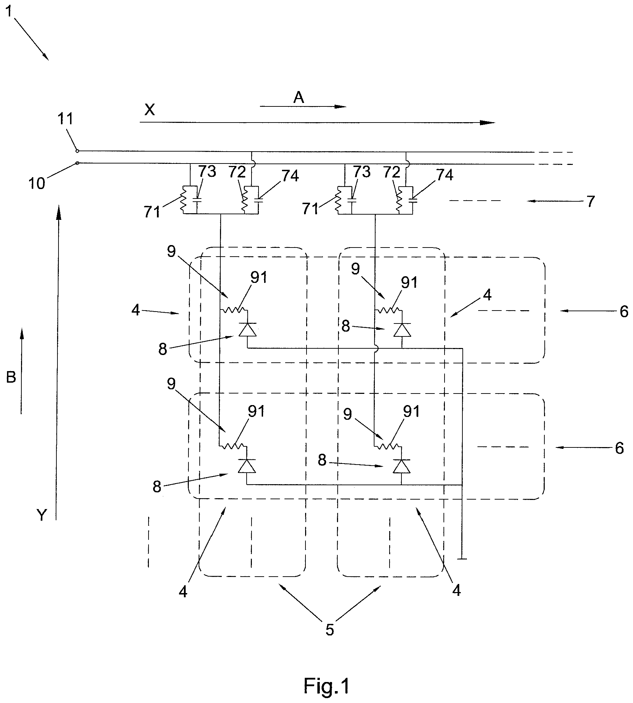

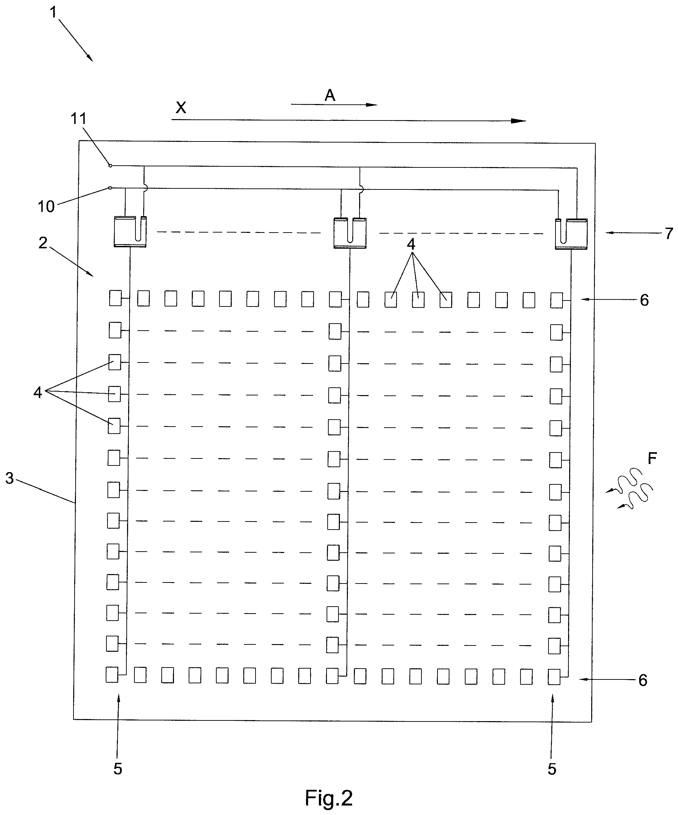

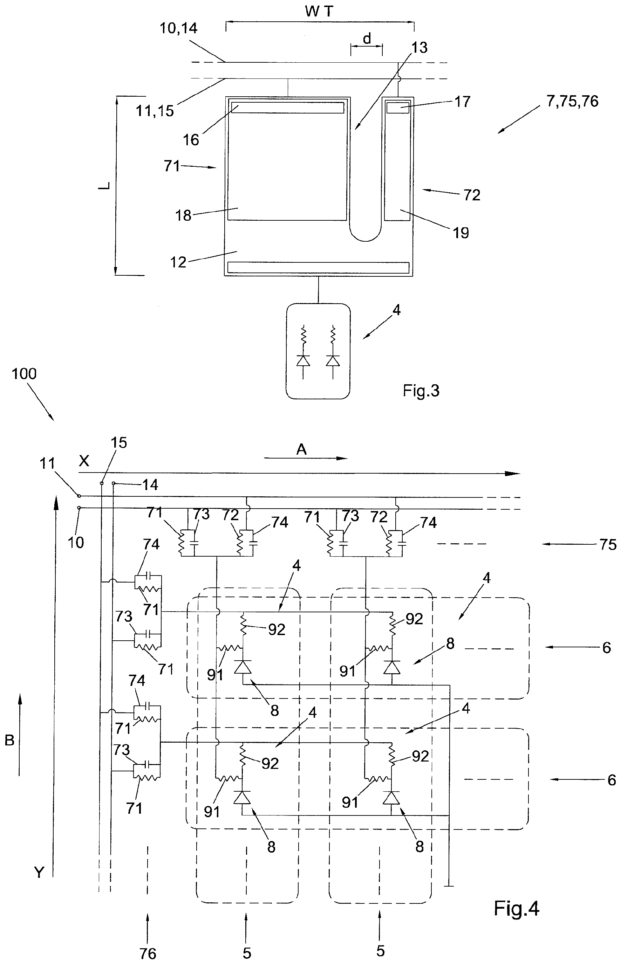

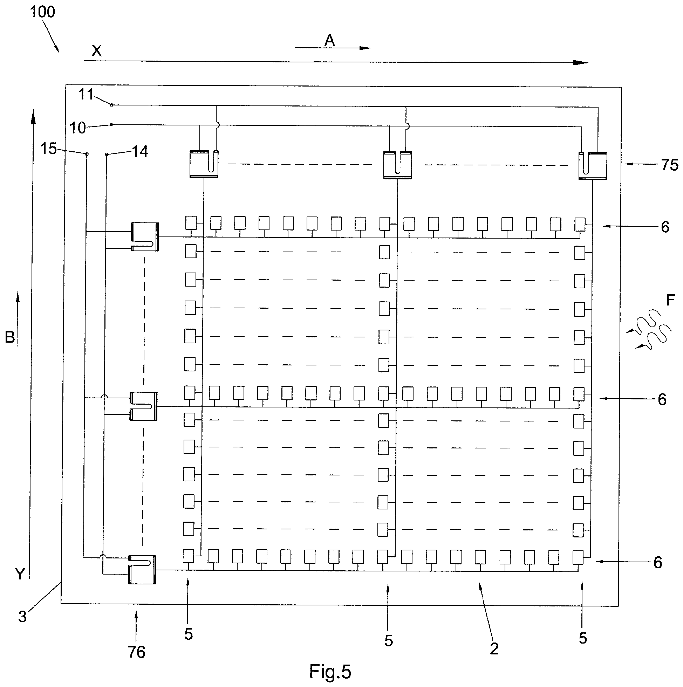

The solid state photomultiplier device (SiPM) of the invention for the detection of one or more photons is represented as a whole, according to a first embodiment, in Figures 1 and 2, indicated with **1,** and according to a second embodiment, in Figures 4 and 5, indicated with **100.**

The photomultiplier device **1** of the invention, according to both of the above preferred embodiments, comprises a surface **2** sensitive to the aforementioned photons **F** located on a semiconductor substrate **3.** Said sensitive surface **2** is provided with a plurality of light sensitive microcells **4** arranged in a matrix so as to define a plurality of columns **5** along a first direction **X** and a plurality of rows **6** along a second direction **Y.**

However, it is not excluded that these light sensitive microcells **4** are arranged so as to define a one-dimensional matrix that extends exclusively along the first direction **X** or exclusively along the second direction **Y.**

Additionally, it is not excluded that, in general, the aforementioned plurality of light sensitive microcells of the photomultiplier device of the invention is divided into sub-groups arranged one after the other according to a pre-established trajectory, not necessarily linear, where each of the above sub-groups includes one or more light sensitive microcells. For example, these sub-groups may be arranged along a circular trajectory.

Therefore, all the features that will be described below for the two specific embodiments of the photomultiplier device of the invention are to be considered valid also for the aforementioned generalization.

According to the first preferred embodiment of the invention, the photomultiplier device **1** comprises a plurality of current dividers **7** associated with the plurality of columns **5.**

However, it is not excluded that in an alternative embodiment to this first preferred embodiment of the invention, the plurality of current dividers **7** can be associated with the plurality of rows **6,** instead of the plurality of columns **5.**

In any case, both of the above embodiments, as will be explained below, define a photomultiplier device of the type known as "position-sensitive" 1D (one-dimensional).

In other words, the first preferred embodiment of the photomultiplier device **1** of the invention, as well as the aforementioned variant, allow the determination of the position of impact of the photons **F** on its sensitive surface **2,** exclusively along the **X** direction of the matrix or exclusively along the **Y** direction of the matrix itself.

For greater simplicity and clarity, henceforth only the first preferred embodiment of the photomultiplier device **1** shown in Figures 1 and 2 will be described, making no more reference to the above variant. Nevertheless, that variant shall be considered implicitly and fully described since from the description of the preferred embodiment of the photomultiplier device **1** below, it is enough to simply replace each reference to the columns **5** with a relative reference to the rows **6** of the matrix of light sensitive microcells **4.**

As seen in Figures 1 and 2, according to the preferred embodiment of the invention, all the light sensitive microcells **4** belonging to the same column **5** are interconnected in parallel to each other, so as to provide a single analog output signal from the column **5** itself.

Preferably, each light sensitive microcell **4** comprises an avalanche photodiode **8** connected in series to a quenching circuit **9.** According to this embodiment of the invention, the quenching circuit **9** is implemented by a quenching resistor **91.** However, it is not excluded that this quenching circuit **9,** in an example, which does describe part of the present invention, can be implemented in another way, provided that it is able to interrupt the avalanche established in one of the light sensitive microcells **4** created by the impact of a photon **F** on it.

In addition, preferably but not necessarily, each current divider **7** belonging to the aforementioned plurality is electrically connected to a single column **5.** Even in this case, an example, which does describe part of the present invention, of the photomultiplier device **1** of Figure 1, may have a current divider **7** connected to two or more columns **5** connected to each other in parallel. Once again, each column **5** shall be connected to only one current divider **7** belonging to the same plurality.

This latter example, disadvantageously results in a decrease of the spatial resolution of the photomultiplier device **1** of the invention, but at the same time enables a reduction in the space necessary for the plurality of current dividers **7** on the semiconductor substrate **3** of the device **1** itself.

As shown in Figure 1, each of the current dividers **7** comprises a first resistor **71** and a second resistor **72** that enable a resistive partition of the current signal coming from its associated column **5,** depending on the resistive value of each of the resistors **71** and **72.**

In particular, as regards the conductance value of the first resistors **71** belonging to the plurality of current dividers **7,** this conductance is gradually decreasing in proportion to the position of the column **5** in which each of the current dividers **7** is electrically connected, according to a first direction, shown in Figures 1 and 2 with the arrow **A,** along the **X** direction.

Similarly, as regards the conductance value of the second resistors **72** belonging to the same plurality of current dividers **7,** this conductance value is gradually increasing in proportion to the position of the column **5** in which each of the current dividers **7** is electrically connected, according to the same direction **A,** along the **X** direction.

Also, preferably but not necessarily, the value of the resistor equivalent to the parallel between the first and the second resistor **71** and **72** is the same for all of the current dividers **7** belonging to the aforementioned plurality of current dividers **7.**

Advantageously, the identical values of the above equivalent resistors allow all columns **5** to have the same impedance towards external electronics, regardless of the position of each of them. In addition, advantageously, this gradually decreasing and gradually increasing conductance value respectively of the first and second resistor **71** and **72** enables the output current from each column **5** to be partitioned gradually proportional to the position that the same column **5** has with respect to the matrix of light sensitive microcells **4,** along the **X** direction.

Therefore, the relationship between these two partitioned currents is in turn gradually proportional to the position of a column **5.**

So, with this approach, to identify and distinguish the column **5** on which an avalanche occurred with respect to the other columns **5,** and therefore to determine its position along the **X** direction, it is sufficient to consider the difference between the two output currents from the relative current divider **7** and normalize this difference with respect to the sum of the same two currents. In other words **X** = (**I₁-I₂**)/(**I₁+I₂**), where **X** is the position of the column **5** of interest and **I₁** and **I₂** are the two partitioned currents relative to the same column **5.**

At this point it is worth mentioning the fact that instead of directly using the partitioned current signals **I₁** and **I₂** to calculate the position of said column **5,** it may be preferable to calculate the areas of these two current signals **I₁** and **I₂** in order to obtain the two corresponding charges **Q₁** and **Q₂**. The values of these charges **Q₁** and **Q₂** are then used in the same way the partitioned currents **I₁** and **I₂** are used to calculate the **X** coordinate, that is, **X** = **(Q₁-Q₂)** / (**Q₁+Q₂**). Advantageously, this alternative approach, in addition to ensuring the precise determination of the **X** coordinate since the relationship between these two charges **Q₁** and **Q₂** is also linearly proportional to the position of the column **5,** also enables higher accuracy of the calculation and the filtering of any noise generated by electronic control devices connected to the photomultiplier device **1.**

Also in this case, if multiple photons impact on the active area of the photomultiplier device **1,** the **X** coordinate calculated is the average of the coordinates of the impacting photons.

In both the above cases, as shown in Figures 1 and 2, in the photomultiplier device **1** of the invention it is possible to define only two output channels **10** and **11,** the first **10** of which is electrically connected to one end of all the first resistors **71** of the plurality of current dividers **7,** while the second output channel **11** is electrically connected to one end of all the second resistors **72** of the same plurality of current dividers **7.**

Advantageously, with respect to the photomultiplier device **1** of the invention shown in Figures 1 and 2, although only two output channels **10** and **11** are implemented, it is possible to accurately locate the column **5** on which an avalanche has occurred, since there is a unique correspondence between the difference of the above two partitioned currents relative to that column **5** and the position of the latter along the **X** direction.

Additionally, according to the aforementioned first preferred embodiment of the invention, each current divider **7** comprises, in addition to the two resistors **71** and **72,** also a first and a second capacitor **73** and **74** configured to implement a capacitive partition of the current coming from the column **5** associated with that divider **7.**

In particular, the first capacitor **73** is connected in parallel to the first resistor **71** of the current divider **7,** while the second capacitor **74** is connected in parallel to the second resistor **72.** Furthermore, the capacitive value of the first capacitor **73** is proportional to the conductance value of the first resistor **71** with a proportionality constant **K.** Similarly, the capacitive value of the second capacitor **74** is proportional to the conductance value of the second resistor **72** with the same proportionality constant **K.**

In this way, the capacitive divider divides the currents between the two output channels **10** and **11** in the same way and with the same partitions as the resistive divider.

The presence of the capacitive divider, in addition to the resistive divider, to partition the current generated by one of the aforementioned columns **5,** helps to maintain the slope of the rising edges of the output signals high, so as to maintain the temporal resolution of the photomultiplier device **1** of the invention high.

As shown in Figure 2, in practice, according to said first preferred embodiment of the invention, the plurality of current dividers **7** is integrated in the same semiconductor substrate **3** on which the matrix of light sensitive microcells **4** is provided, in a position adjacent to the columns **5** along the **X** direction. Furthermore, as shown in Figure 3 and according to the above first preferred embodiment of the invention, each current divider **7** comprises a resistive layer **12** on which a space **13** is created to define and discriminate the first resistor **71** from said second resistor **72.**

In particular, preferably but not necessarily, the length **L** and the width **W_{T}** of the resistive layer **12** and the thickness **d** of the space **13** are kept constant for all the current dividers **7** belonging to the aforementioned plurality. As regards the position in which this space **13** is created on the resistive layer **12,** it is linearly dependent on the position along the **X** direction of the column **5** or group of columns **5** to which each current divider **7** is electrically connected. This configuration advantageously contributes to maintaining, among all of the current dividers **7,** a constant value of the resistance equivalent to the parallel of the first and the second resistor **71** and **72** and of the capacitance equivalent to the parallel of the first and second capacitors **73** and **74.**

Additionally, as shown in Figure 3, the aforementioned first embodiment of the invention envisages that the electrical contacts **16** and **17** between the two resistors **71** and **72** of each divider **7** and its related output channels **10** and **11** with widths proportional to the width of each of said first and second resistors **71** and **72.**

This particular implementation advantageously enables the minimization of possible distortions in the photomultiplier device **1** caused by an impedance value of the electrical contacts **16** and **17** which is not proportional to the resistive value of the first and the second resistor **71** and **72** of the specific current divider **7.**

Finally, according to the preferred embodiment of the current divider **7** shown in Figure 3, the aforesaid first and second capacitors **73** and **74** are implemented by a first and a second metal layer **18** and **19** overlapping the resistive layer **12.** In particular, each of these metal layers **18** and **19** has a width respectively proportional to the width of the first resistor **71** and the second resistor **72.**

One possible application of the above "position-sensitive" 1D photomultiplier device **1** of the invention could be the detection of light beams of scintillating fibers, coupled with different positions of the sensitive surface **2** of the device **1** itself. This makes it possible to identify which fibers have detected an event, resulting in the position **X** of the column in which an avalanche occurred. A typical example could be a particle tracker in a physics experiment.

Before describing the second preferred embodiment of the photomultiplier device **100** of the invention, the following is worth mentioning.

The signal/noise ratio, or S/N, is influenced by several factors with respect to the spatial resolution. As a first approximation, the term that represents the noise in the S/N is affected by the noise of the photomultiplier device and the electronics. The term which represents the signal in the S/N is influenced by the amplitude of the signal generated by the light sensitive microcells following the flash of light and the difference between the current partition of one divider **7** and the adjacent one. Considering a maximum conductance value of the first resistor **71** at one end of the plurality of current dividers **7** and a minimum conductance value at the opposite end, and vice versa for the second resistor **72,** and keeping in mind that the conductance values vary gradually from one end to the other, the amplitude of the difference in the current partition between one divider **7** and the adjacent one is inversely proportional to the number of the dividers **7** themselves. Therefore, all other conditions being equal, the spatial resolution will be better with a lower number of dividers. Consequently, considering this first embodiment of the photomultiplier device **1** suited for 1D applications, given a plurality of current dividers **7** along the **X** direction, corresponding to a certain number of columns **5** or groups of columns **5** of the device, to obtain a better spatial resolution it is possible to divide the plurality of dividers **7** into two or more sub-groups of dividers, each designed as if it were a single independent divider.

In particular, the conductance of the first resistor **71** of each sub-group gradually decreases in proportion to the position of the column **5,** compared to the same sub-group, to which each of its current dividers **7** is electrically connected and is connected to the first output channel of the sub-group of dividers, while the conductance of the second resistor **72** gradually increases in proportion to the position of the column **5,** compared to the same sub-group, to which each of its current dividers **7** is electrically connected and is connected to the second output channel of the specific sub-group of dividers. In this case there would be two output channels for each sub-group of current dividers. To reduce the number of output channels, the second output channel of each sub-group of dividers **7** is connected with the first output channel of the adjacent sub-group of dividers and brought to an external read channel, except for the two on-board sub-groups of dividers **7,** in which the first or the second output channels are directly connected to a read channel of the photomultiplier device. In this way, (*n*+1) output channels are needed for *n* sub-groups of dividers.

As noted, the invention also includes a second preferred embodiment of the photomultiplier device **100** of the invention shown in Figures 4 and 5. This photomultiplier device **100** of the invention differs from that just described since it is a "position-sensitive" 2D (two-dimensional) photomultiplier device.

In other words, with this photomultiplier device **100** it is possible to determine the position of impact of the photons **F** along the **X** direction and **Y** direction of the matrix of light sensitive microcells **4.**

To this end, the photomultiplier device **100** shown in Figures 4 and 5 comprises, unlike the photomultiplier device **1,** the features described below.

First, as shown in Figures 4 and 5, in the photomultiplier device **100** each light sensitive microcell **4** is connected in parallel to the light sensitive microcells **4** belonging to the same column **5** and at the same time is connected to the light sensitive microcells **4** belonging to the same row **6.**

In order to achieve this double connection in parallel, each light sensitive microcell **4,** as shown in Figure 4, is provided with an avalanche photodiode **8** connected in series to a first and to a second quenching resistor **91** and **92.** In particular, the first quenching resistor **91** is connected in parallel with the light sensitive microcells **4** belonging to the same column **5,** while the second quenching resistor **92** is connected in parallel with the light sensitive microcells **4** belonging to the same row **6.**

Preferably but not necessarily, these first and second quenching resistors **91** and **92** have the same resistive value. In this way, advantageously, the current generated by the avalanche in a specific photodiode **8** is distributed equally between these two quenching resistors **91** and **92** and therefore, between the column **5** and the row **6** to which that photodiode **8** is connected.

Thanks to the fact that the impedance towards the electronics seen from every row **6** is the same, the signal that comes out of the column **5** along the **X** direction is not influenced by the position of the same row **6** along the **Y** direction in which the photon is detected. Obviously, the same principle is also true when the parts are reversed, that is, considering a row **6.**

For this reason, advantageously, this configuration results in a substantial reduction, if not the absence, of the so-called "pincushion distortion".

As seen in Figures 4 and 5, the photomultiplier device **100,** unlike the one in the first preferred embodiment, comprises a first plurality of current dividers **75** associated with the plurality of columns **5** and a second plurality of current dividers **76** associated in turn with the rows **6.**

These two pluralities of current dividers **75** and **76,** as will be clear below, contribute, together with the aforementioned two quenching resistors **91** and **92** connected in parallel, to obtain the current signals relative to the columns **5,** that is, at the **X** coordinate, and the rows **6,** that is, at the **Y** coordinate, which are independent of each other.

Returning to the second preferred embodiment of the invention, as shown in Figure 4, each current divider belonging to the first plurality **75** is connected to a single column **5,** while each current divider of the second plurality **76** is connected to a single row **6.** Even in this case, it is not excluded that in alternative embodiments of the photomultiplier device **100** of the invention, each current divider belonging to the first plurality **75** or to the second plurality **76** can be connected respectively to two or more columns **5** connected in parallel to each other or to two or more rows **6** connected in parallel to each other.

Once again it is highlighted that each column **5** can be connected only to one current divider **75** of the same plurality, and in the same manner each row **6** can be connected only to one current divider **76** of the same plurality.

Also in the case of the second preferred embodiment of the photomultiplier device **100** of the invention, like in the first preferred embodiment, each current divider **75** or **76** comprises a first resistor **71** and a second resistor **72** configured to implement a resistive partition of the output current from its corresponding column **5** or row **6.** Furthermore, in the photomultiplier device **100** the first resistors **71** and the second resistors **72** belonging to the first plurality of current dividers **75** respectively have a gradually decreasing and gradually increasing conductance value in proportion to the position of the column **5** to which each of them is electrically connected, according to the first direction **A,** along the first direction **X.**

Similarly, the first resistors **71** and the second resistors **72** belonging to the second plurality of current dividers **76** respectively have a gradually decreasing and gradually increasing resistive value in proportion to the position of the row **6** to which each of them is electrically connected, according to the first direction **B** along the second direction **Y.**

Preferably but not necessarily, this gradual change of the conductance of the two resistors **71** and **72** of each current divider **75** and **76** is linear along the **X** and **Y** directions. However, these conductance values of the aforementioned resistors **71** and **72** may vary non-linearly from one end to the other of the above **X** and **Y** directions, if required by the application.

As noted, the currents partitioned by the current dividers of the first plurality **75** and by the current dividers of the second plurality **76** are extracted from the photomultiplier device **100** of the invention using four output channels **10, 11** and **14, 15.** In particular, as shown in Figures 4 and 5, the first and the second output channel **10** and **11** are respectively connected to one end of all the first resistors **71** and to one end of all the second resistors **72** of the first plurality of current dividers **75.** Similarly, according to the second preferred embodiment of the photomultiplier device **100** of the invention, the third and fourth output channels **14** and **15** are connected respectively to one end of all the first resistors **71** and to one end of all the second resistors **72** of the second plurality of current dividers **76.** Again, this latter characteristic, together with the presence of two quenching resistors **91** and **92** connected in parallel for each of the microcells **4,** enables the independent determination of the two **X** and **Y** coordinates relative to the position of incidence of a photon on the sensitive surface **2** of the photomultiplier device **100** of the invention. In particular, the difference between the current signals extracted from the first and second output channels **10** and **11** is linearly proportional to the position along the **X** direction of the column **5** in which the impact occurred, while the difference between the current signals extracted from the third and fourth output channels **14** and **15** is linearly proportional to the position along the **Y** direction of the row **6** in which the impact occurred. Even in this case, to determine the aforementioned **X** and **Y** coordinates, instead of using the current values extracted from the four output channels **10, 11, 14** and **15,** the relative values of the positions detected on those channels could be used. Also in this case, if multiple photons simultaneously impact the sensitive surface **2** of the photomultiplier device **100,** their average position will be calculated.

As shown in Figure 5, in practice, the two pluralities of current dividers **75** and **76** are integrated in the same semiconductor substrate **3** on which the matrix of light sensitive microcells **4** is realized, in a position adjacent to the columns **5** along the **X** direction and the rows **6** along the **Y** direction.

As regards each current divider of both pluralities **75** and **76,** they are made in the same manner described for the aforementioned first preferred embodiment shown in Figure 3.

Finally, also in the case of a 2D photomultiplier device and in particular in the case of the photomultiplier device **100** of the invention, it is possible to increase the spatial resolution by dividing each of the pluralities of current dividers **75** and **76,** associated respectively with the columns **5** and rows **6,** in two or more sub-groups of current dividers in the same manner previously described for the 1D photomultiplier device.

In this case the number of channels is significantly lower. In fact, if a certain active area were divided into *n* × *n* position-sensitive sub-SiPMs, each of them needing 4 output channels, a total of 4 x *n*^2 output channels would be needed. With the proposed alternative configuration, it is possible to achieve the same spatial resolution with 2 × (*n*+1) independent reading channels.

Finally, it is possible to extend the principle of operation described for the 2D PS-SiPM to an arbitrary number of different partitions of the SiPM microcells **4** in sub-groups. In fact, for each microcell **4,** there are *n* quenching resistors **9** available. For each quenching resistor **9ᵢ**, an arbitrary subdivision **Sᵢ** of microcells **4** of the photomultiplier device into sub-groups is carried out, thus resulting in *n* different subdivisions of the SiPM microcells **4.** For each subdivision **Sᵢ** a plurality of current dividers **7ᵢ** is used wherein each divider is connected to only one of the sub-groups of microcells **4** of the subdivision **Sᵢ** through the quenching resistor **9ᵢ** of the microcells **4** of that sub-group. The difference of the signals extracted from the first output channel **10** and the second output channel **11** of the plurality of current dividers **7ᵢ**, similarly to what was described above, enables the identification of the sub-group of the subdivision **Sᵢ**, to which the microcell **4** in which the photon impacted belongs. If necessary, also in this case it is possible to use a nonlinear variation of the conductance of the first and second resistors **71** and **72** of the plurality of dividers **7ᵢ**, or divide a plurality of dividers **7ᵢ** into sub-dividers, as previously described. To allow the signals associated with a subdivision **Sᵢ** to be independent from the other subdivisions, it is necessary that the impedance of the parallel of the two resistors **71** and **72** and the two capacitors **73** and **74** of each current divider belonging to the same plurality of dividers **7ᵢ** be the same, but not necessarily the same for the dividers of two different pluralities **7ᵢ** and **7ⱼ**.

The 2D PS-SiPM is a special case of this approach in which *n* = 2 and **S₁** is the subdivision of the microcells **4** of the photomultiplier device **100** for columns **5** and **S₂** is the subdivision for rows **6.**

As previously noted, the invention also includes the method for the determination of at least one first **X** or **Y** coordinate of the position of impact of one or more photons **F** on the sensitive surface **2** of the photomultiplier devices **1** and **100** of the invention.

In particular, the method of the invention applied to the first embodiment of the photomultiplier device **1** envisages the simultaneous detection of the current signal from the first output channel **10** and the second channel **11.**

The method subsequently includes the calculation of the areas of the current signals detected in such a way as to obtain the two corresponding charge values.

The method of the invention subsequently includes the calculation of the difference between the values of the two charges previously calculated.

Again, the method of the invention may alternatively include the direct calculation of the difference between the currents detected on said output channels **10** and **11,** rather than between the above charge values.

Finally, the method includes the normalization of this difference with respect to the sum of said two charge values so as to determine the **X** coordinate related to the position of impact of one or more photons on the sensitive surface **2** of the photomultiplier devices **1** of the invention.

In the case in which the method of the invention is applied using the second embodiment of the photomultiplier device **100** of the invention, it includes the simultaneous detection of the current signals from the first output channel **10** and the second output channel **11,** as well as from the third output channel **14** and the fourth output channel **15.**

In addition, the method provides for the calculation of the areas of the aforementioned current signals so as to obtain the four corresponding charge values.

The method of the invention subsequently includes the calculation of the difference between the charge values related to the current signals detected by the first and second output channel **10** and **11** and between the charge values related to the current signals detected by the third and the fourth output channel **14** and **15.**

Finally, the method includes the normalization of these differences with respect to the sum of the charge values related to the two current signals respectively of the first and the second output channel **10** and **11** and of the third and the fourth output channel **14** and **15** to determine the **X** or **Y** coordinate relative to the position of impact of one or more photons on the sensitive surface **2** of the photomultiplier devices **100** of the invention.

Based on the above, it is clear that the photomultiplier device of the invention and its method achieve all the intended objects.

In particular, the invention achieves the purpose of realizing a photomultiplier device able to accurately determine the position of impact of one or more photons on its sensitive surface, and that simultaneously comprises a limited number of output channels.

Therefore, the invention also achieves the object of realizing a photomultiplier device with high spatial resolution and simultaneously limited constructive and operational complexity.

The invention furthermore achieves the object to provide a photomultiplier device in which the distortions of the signals due to its inherent characteristics are decreased, if not eliminated.

The invention also achieves the object to provide a photomultiplier device with high spatial resolution that has a low, if not absent, sensitivity to possible misalignments between the scintillator and the sensitive surface of the device itself.

Finally, the invention also achieves the object to provide a position-sensitive photomultiplier device able to generate signals with fast rising edges comparable to those of a non position-sensitive SiPM, so as to provide high temporal resolution.

## Claims

1. Solid-state photomultiplier device (1, 100) for detecting one or more photons (F), comprising
a semiconductor substrate (3), a surface (2) sensitive to said photons (F) created on said semiconductor substrate (3), said sensitive surface (2) being provided with a plurality of light sensitive microcells (4) divided into a plurality of sub-groups arranged one after the other according to a pre-established trajectory, each one of said sub-groups comprising one or more of said light sensitive microcells (4), the device further comprising:
- at least one plurality of current dividers (7) each one of which is electrically connected to at least one of said sub-groups, each one of said current dividers (7) comprising a first resistor (71) and a second resistor (72) in order to obtain a division of said current of the resistive type, said first resistors (71) and said second resistors (72) of said plurality of current dividers (7) respectively having a conductance value gradually decreasing and gradually increasing in proportion to the position, along said pre-established trajectory, of said at least one subgroup to which each one of said current dividers (7) is electrically connected;
- a first outlet channel (10) electrically connected to one end of said first resistors (71) and a second outlet channel (11) electrically connected to one end of said second resistors (72),
**characterized in that**
said at least one plurality of current dividers (7) is integrated in said semiconductor substrate (3) on which said plurality of light sensitive microcells (4) is provided.

2. Photomultiplier device according to claim 1, comprising a sensitive surface (2) provided with a plurality of light sensitive microcells (4) arranged as a matrix in such a way as to define a plurality of columns (5) along a first direction X and/or a plurality of rows (6) along a second direction Y, and further comprising:
- at least one plurality of current dividers (7) associated with said plurality of columns (5) or with said plurality of rows (6) and integrated in said semiconductor substrate (3) on which said plurality of light sensitive microcells (4) is provided, in a position adjacent to said plurality of columns (5) along said first direction X or in a position adjacent to said plurality of rows (6) along said second direction Y, wherein each one of said current dividers (7) is electrically connected to at least one column of said plurality of columns (5) or to at least one row of said plurality of rows (6), each one of said current dividers (7) comprising a first resistor (71) and a second resistor (72) in order to obtain a division of said current of the resistive type, said first resistors (71) and said second resistors (72) of said plurality of current dividers (7) respectively having a conductance value gradually decreasing and gradually increasing in proportion to the position of the column (5) or of the row (6) to which each one of said current dividers (7) is electrically connected according to a first sense (A, B) along said first direction X or along said second direction Y;
- a first outlet channel (10) electrically connected to one end of said first resistors (71) and a second outlet channel (11) electrically connected to one end of said second resistors (72).

3. Photomultiplier device (1) according to claim 2, wherein said plurality of light sensitive microcells (4) arranged as a matrix defines exclusively said plurality of columns (5) along said first direction X or said plurality of rows (6) along said second direction Y and wherein each one of said light sensitive microcells (4) comprises an avalanche photodiode (8) connected in series to a quenching resistance (9).

4. Photomultiplier device (100) according to claim 2, comprising a plurality of light sensitive microcells (4) arranged as a matrix so as to define a plurality of columns (5) along said first direction X and a plurality of rows (6) along said second direction Y, wherein the light sensitive microcells (4) belonging to the same column (5) are connected in parallel to each other and the light sensitive microcells (4) belonging to the same row (6) are connected in parallel to each other, comprising:
- a first plurality of current dividers (75) associated with said plurality of columns (5) and integrated in said semiconductor substrate (3) on which said plurality of light sensitive microcells (4) is realized, in a position adjacent to said plurality of columns (5) along said first direction X and a second plurality of current dividers (76) associated with said plurality of rows (6) and integrated in said semiconductor substrate (3) on which said plurality of light sensitive microcells (4) is realized, in a position adjacent to said plurality of rows (6) along said second direction Y, wherein each current divider of said first plurality of dividers (75) is connected to at least one column of said plurality of columns (5) and each current divider of said second plurality of current dividers (76) is connected to at least one row of said plurality of rows (6), each one of said current dividers (75, 76) comprising a first resistor (71) and a second resistor (72) so as to obtain a division of said current of the resistive type, said first resistors (71) and said second resistors (72) respectively having a conductance value gradually decreasing and gradually increasing in proportion to the position of the column (5) or of the row (6) to which each one of said current dividers (75, 76) is electrically connected according to a first sense (A, B) along said first direction X or along said second direction Y;
- four outlet channels (10, 11, 14, 15), wherein the first outlet channel (10) is connected to one end of said first resistors (71) of said first plurality of current dividers (75), the second outlet channel (11) is connected to one end of said second resistors (72) of said first plurality of current dividers (75), the third outlet channel (14) is connected to one end of said first resistors (71) of said second plurality of current dividers (76) and the fourth outlet channel (15) is connected to one end of said second resistors (72) of said second plurality of dividers (76).

5. Photomultiplier device (100) according to claim 4, wherein each one of said light sensitive microcells (4) comprises an avalanche photodiode (8) connected in series to a first and a second quenching resistance (91, 92), said first quenching resistance (91) being connected in parallel with the light sensitive microcells (4) belonging to the same column (5) and said second quenching resistance (92) being connected in parallel to the light sensitive microcells (4) belonging to the same row (6).

6. Photomultiplier device (100) according to claim 5, wherein thet-said first and said second quenching resistances (91, 92) have the same resistive value.

7. Photomultiplier device (1, 100) according to any of the preceding claims, wherein the value of the equivalent resistance of said first and said second resistors (71, 72) in parallel is the same for said at least one plurality of current dividers (7, 75, 76).

8. Photomultiplier device (1, 100) according to any of the preceding claims, wherein each divider of said plurality of current dividers (7, 75, 76) comprises a resistive layer (12) on which a space (13) is created in order to define said first and said second resistors (71, 72), the length (L) and the width (W_{T}) of said resistive layer (12) and the thickness (d) of said space (13) being kept constant for said plurality of current dividers (7, 75, 76) and the position of said space (13) on said resistive layer (12) depending on the position of said at least one sub-group to which said current divider (7, 75, 76) is electrically connected according to said pre-defined trajectory.

9. Photomultiplier device (1, 100) according to claim 8, wherein the widths of the electrical contacts (16, 17) between said first and said second resistors (71, 72) of each one of said current dividers (7, 75, 76) and the relevant outlet channels (10, 11, 14, 15) are proportional to the width of said first and said second resistors (71, 72).

10. Photomultiplier device (1, 100) according to any of the preceding claims, wherein each one of said current dividers (7, 75, 76) comprises a first and a second capacitor (73, 74) in order to obtain a division of said current of the capacitive type, said first and said second capacitors (73, 74) being respectively connected in parallel to said first and said second resistors (71, 72) and the capacitive value of said first capacitor (73) being proportional, with a constant of proportionality K, to the conductance value of said first resistor (71) and the capacitive value of said second capacitor (74) being proportional, with said constant of proportionality K, to the conductance value of said second resistor (72).

11. Photomultiplier device (1, 100) according to claim 10 in combination with any of claims 8 or 9, wherein each one of said current dividers (7, 75, 76) comprises two metal layers (18, 19) overlapping said resistive layer (12) to define said first and said second capacitors (73, 74), the widths of said first and said second capacitors (73, 74) being respectively proportional to the widths of said first and said second resistors (71, 72).

12. Photomultiplier device (1, 100) according to any of the preceding claims, wherein each one of said current dividers (7, 75, 76) is electrically connected to a single sub-group of light sensitive microcells (4).

13. Photomultiplier device (1, 100) according to any of claims from 1 to 11, wherein one or more of said current dividers (7, 75, 76) is electrically connected to two or more sub-groups of light sensitive microcells (4) connected in parallel to each other.

## Patentansprüche

1. Solid-state-Photomultiplier-Vorrichtung (1, 100) zum Erfassen eines oder mehrerer Photonen (F), umfassend
ein Halbleitersubstrat (3), eine gegenüber den auf dem Halbleitersubstrat (3) erzeugten Photonen (F) empfindliche Oberfläche (2), wobei die empfindliche Oberfläche (2) mit einer Mehrzahl lichtempfindlicher Mikrozellen (4) versehen ist, die in eine Mehrzahl von Untergruppen unterteilt sind, die hintereinander auf einer zuvor angelegten Bahn angeordnet sind, wobei jede der Untergruppen eine oder mehrere lichtempfindliche Mikrozellen (4) umfasst, wobei die Vorrichtung weiter Folgendes umfasst:
- wenigstens eine Mehrzahl von Stromteilern (7), die jeweils mit wenigstens einer der Untergruppen elektrisch verbunden sind, wobei jeder der Stromteiler (7) einen ersten Widerstand (71) und einen zweiten Widerstand (72) umfasst, um eine Teilung des Stroms vom resistiven Typ zu erhalten, wobei die ersten Widerstände (71) und die zweiten Widerstände (72) der Mehrzahl von Stromteilern (7) jeweils einen stufenweise abnehmenden und stufenweise zunehmenden Konduktanzwert im Verhältnis zur Position entlang der zuvor festgelegten Bahn der wenigstens einen Untergruppe aufweisen, mit der jeder der Stromteiler (7) elektrisch verbunden ist;
- einen ersten Auslasskanal (10), der mit einem Ende der ersten Widerstände (71) elektrisch verbunden ist, und einen zweiten Auslasskanal (11), der mit einem Ende der zweiten Widerstände (72) elektrisch verbunden ist,
**dadurch gekennzeichnet, dass**
die wenigstens eine Mehrzahl von Stromteilern (7) in das Halbleitersubstrat (3) integriert ist, in dem die Mehrzahl von lichtempfindlichen Mikrozellen (4) vorgesehen ist.

2. Photomultiplier-Vorrichtung nach Anspruch 1, umfassend eine empfindliche Oberfläche (2), die mit einer Mehrzahl von lichtempfindlichen Mikrozellen (4) versehen ist, die als Matrix angeordnet sind, derart, dass eine Mehrzahl von Spalten (5) entlang einer ersten Richtung X und/oder eine Mehrzahl von Reihen (6) entlang einer zweiten Richtung Y definiert wird, und weiter umfassend:
- wenigstens eine Mehrzahl von Stromteilern (7), die mit der Mehrzahl von Spalten (5) oder der Mehrzahl von Reihen (6) verbunden und in das Halbleitersubstrat (3) integriert sind, in dem die Mehrzahl von lichtempfindlichen Mikrozellen (4) vorgesehen ist, in einer zu der Mehrzahl von Spalten (5) benachbarten Position entlang der ersten Richtung X oder in einer zu der Mehrzahl von Reihen (6) benachbarten Position entlang der zweiten Richtung Y, wobei jeder der Stromteiler (7) mit wenigstens einer Spalte der Mehrzahl von Spalten (5) oder mit wenigstens einer Reihe der Mehrzahl von Reihen (6) elektrisch verbunden ist, wobei jeder der Stromteiler (7) einen ersten Widerstand (71) und einen zweiten Widerstand (72) umfasst, um eine Teilung des Stroms vom resistiven Typ zu erhalten, wobei die ersten Widerstände (71) und die zweiten Widerstände (72) der Mehrzahl von Stromteilern (7) jeweils einen stufenweise abnehmenden und stufenweise zunehmenden Konduktanzwert im Verhältnis zur Position der Spalte (5) oder der Reihe (6) aufweisen, mit der jeder der Stromteiler (7) gemäß einer ersten Richtung (A, B) entlang der ersten Richtung X oder entlang der zweiten Richtung Y elektrisch verbunden ist;
- einen ersten Auslasskanal (10), der mit einem Ende der ersten Widerstände (71) elektrisch verbunden ist, und einen zweiten Auslasskanal (11), der mit einem Ende der zweiten Widerstände (72) elektrisch verbunden ist.

3. Photomultiplier-Vorrichtung (1) nach Anspruch 2, wobei die Mehrzahl der lichtempfindlichen Mikrozellen (4), die als Matrix angeordnet sind, ausschließlich die Mehrzahl von Spalten (5) entlang der ersten Richtung X oder der Mehrzahl von Reihen (6) entlang der zweiten Richtung Y definiert und wobei jede der lichtempfindlichen Mikrozellen (4) eine Lawinenphotodiode (8) umfasst, die mit einem Quench-Widerstand (9) in Reihe geschaltet ist.

4. Photomultiplier-Vorrichtung (100) nach Anspruch 2, umfassend eine Mehrzahl von lichtempfindlichen Mikrozellen (4), die als Matrix angeordnet sind, um eine Mehrzahl von Spalten (5) entlang der ersten Richtung X und eine Mehrzahl von Reihen (6) entlang der zweiten Richtung Y zu definieren, wobei die lichtempfindlichen Mikrozellen (4), die derselben Spalte (5) angehören, zueinander parallel geschaltet sind und die lichtempfindlichen Mikrozellen (4), die derselben Reihe (6) angehören, zueinander parallel geschaltet sind, umfassend:
- eine erste Mehrzahl von Stromteilern (75), die mit der Mehrzahl von Spalten (5) verbunden und in das Halbleitersubstrat (3) integriert sind, in dem die Mehrzahl von lichtempfindlichen Mikrozellen (4) realisiert ist, in einer der Mehrzahl von Spalten (5) benachbarten Position entlang der ersten Richtung X und einer zweiten Mehrzahl Stromteilern (76), die mit der Mehrzahl von Reihen (6) verbunden und in das Halbleitersubstrat (3) integriert sind, auf dem die Mehrzahl von lichtempfindlichen Mikrozellen (4) realisiert ist, in einer benachbarten Position zur Mehrzahl von Reihen (6) entlang der zweiten Richtung Y, wobei jeder Stromteiler der ersten Mehrzahl von Stromteilern (75) mit wenigstens einer Spalte der Mehrzahl von Spalten (5) verbunden ist und jeder Stromteiler der zweiten Mehrzahl von Stromteilern (76) mit wenigstens einer Reihe der Mehrzahl von Reihen (6) verbunden ist, wobei jeder der Stromteiler (75, 76) einen ersten Widerstand (71) und einen zweiten Widerstand (72) umfasst, um eine Teilung des Stroms vom resistiven Typ zu erhalten, wobei die ersten Widerstände (71) und die zweiten Widerstände (72) jeweils einen stufenweise abnehmenden und stufenweise zunehmenden Konduktanzwert im Verhältnis zur Position der Spalte (5) oder der Reihe (6) aufweisen, mit der jeder der Stromteiler (75, 76) gemäß einer ersten Richtung (A, B) entlang der ersten Richtung X oder entlang der zweiten Richtung Y elektrisch verbunden ist;
- vier Auslasskanäle (10, 11, 14, 15), wobei der erste Auslasskanal (10) mit einem Ende der ersten Widerstände (71) der ersten Mehrzahl von Stromteilern (75) verbunden ist, der zweite Auslasskanal (11) mit einem Ende der zweiten Widerstände (72) der ersten Mehrzahl von Stromteilern (75) verbunden ist, der dritte Auslasskanal (14) mit einem Ende der ersten Widerstände (71) der zweiten Mehrzahl von Stromteilern (76) verbunden ist und der vierte Auslasskanal (15) mit einem Ende der zweiten Widerstände (72) der zweiten Mehrzahl von Stromteilern (76) verbunden ist.

5. Photomultiplier-Vorrichtung (100) nach Anspruch 4, wobei jede der lichtempfindlichen Mikrozellen (4) eine Lawinenphotodiode (8) umfasst, die mit einem ersten und einem zweiten Quench-Widerstand (91, 92) in Reihe geschaltet ist, wobei der erste Quench-Widerstand (91) mit den lichtempfindlichen Mikrozellen (4) parallel geschaltet ist, die derselben Spalte (5) angehören, und der zweite Quench-Widerstand (92) mit den lichtempfindlichen Mikrozellen (4) parallel geschaltet ist, die derselben Reihe (6) angehören.

6. Photomultiplier-Vorrichtung (100) nach Anspruch 5, wobei die ersten und zweiten Quench-Widerstände (91, 92) denselben Widerstandswert aufweisen.

7. Photomultiplier-Vorrichtung (1, 100) nach einem der vorstehenden Ansprüche, wobei der Wert des äquivalenten Widerstands der parallel geschalteten ersten und zweiten Widerstände (71, 72) bei der wenigstens eine Mehrzahl von Stromteilern (7, 75, 76) gleich ist.

8. Photomultiplier-Vorrichtung (1, 100) nach einem der vorstehenden Ansprüche, wobei jeder Stromteiler der Mehrzahl von Stromteilern (7, 75, 76) eine Widerstandsschicht (12) umfasst, auf der eine Raum (13) geschaffen ist, um die ersten und die zweiten Widerstände (71, 72) zu definieren, wobei die Länge (L) und die Breite (W_{T}) der Widerstandsschicht (12) und die Dicke (d) des Raums (13) bei der Mehrzahl von Stromteilern (7, 75, 76) konstant gehalten werden und die Position des Raumes (13) auf der Widerstandsschicht (12) von der Position der wenigstens einen Untergruppe abhängt, mit der der Stromteiler (7, 75, 76) auf einer zuvor festgelegten Bahn elektrisch verbunden ist.

9. Photomultiplier-Vorrichtung (1, 100) nach Anspruch 8, wobei die Breiten der elektrischen Kontakte (16, 17) zwischen den ersten und den zweiten Widerständen (71, 72) eines jeden der Stromteiler (7, 75, 76) und die entsprechenden Auslasskanäle (10, 11, 14, 15) proportional zur Breite der ersten und zweiten Widerstände (71, 72) sind.

10. Photomultiplier-Vorrichtung (1, 100) nach einem der vorstehenden Ansprüche, wobei jeder der Stromteiler (7, 75, 76) einen ersten und einen zweiten Kondensator (73, 74) umfasst, um eine Teilung des Stroms vom kapazitiven Typ zu erhalten, wobei die ersten und zweiten Kondensatoren (73, 74) jeweils mit den ersten und zweiten Widerständen (71, 72) parallel geschaltet sind und der Kapazitätswert des ersten Kondensators (73) bei einer Proportionalitätskonstante K proportional zum Konduktanzwert des ersten Widerstands (71) ist und der Kapazitätswert des zweiten Kondensators (74) bei einer Proportionalitätskonstante K proportional zum Konduktanzwert des zweiten Widerstands (72) ist.

11. Photomultiplier-Vorrichtung (1, 100) nach Anspruch 10 in Kombination mit einem der Ansprüche 8 oder 9, wobei jeder der Stromteiler (7, 75, 76) zwei Metallschichten (18, 19) umfasst, die über der Widerstandsschicht (12) liegen, um die ersten und zweiten Kondensatoren (73, 74) zu definieren, wobei die Breiten der ersten und zweiten Kondensatoren (73, 74) jeweils proportional zu den Breiten der ersten und zweiten Widerstände (71, 72) sind.

12. Photomultiplier-Vorrichtung (1, 100) nach einem der vorstehenden Ansprüche, wobei jeder der Stromteiler (7, 75, 76) mit einer einzelnen Untergruppe von lichtempfindlichen Mikrozellen (4) elektrisch verbunden ist.

13. Photomultiplier-Vorrichtung (1, 100) nach einem der Ansprüche 1 bis 11, wobei einer oder mehrere der Stromteiler (7, 75, 76) mit zwei oder mehreren Untergruppen von zueinander parallel geschalteten, lichtempfindlichen Mikrozellen (4) elektrisch verbunden sind.

## Revendications

1. Dispositif photomultiplicateur à l'état solide (1, 100) pour détecter un ou plusieurs photons (F), comprenant
un substrat semi-conducteur (3), une surface (2) sensible auxdits photons (F) créée sur ledit substrat semi-conducteur (3), ladite surface sensible (2) étant munie d'une pluralité de microcellules photosensibles (4) divisée en une pluralité de sous-groupes agencés l'un après l'autre suivant une trajectoire préétablie, chacun desdits sous-groupes comprenant une ou plusieurs desdites microcellules photosensibles (4), le dispositif comprenant en outre:
- au moins une pluralité de diviseurs de courant (7), chacun desquels est connecté électriquement à au moins un desdits sous-groupes, chacun desdits diviseurs de courant (7) comprenant une première résistance (71) et une deuxième résistance (72) de manière à obtenir une division dudit courant de type résistif, lesdites premières résistances (71) et lesdites deuxièmes résistances (72) de ladite pluralité de diviseurs de courant (7) ayant respectivement une valeur de conductance progressivement décroissante et progressivement croissante proportionnellement à la position, suivant ladite trajectoire préétablie, dudit au moins un sous-groupe auquel chacun desdits diviseurs de courant (7) est connecté électriquement;
- un premier canal de sortie (10) connecté électriquement à une extrémité desdites premières résistances (71) et un deuxième canal de sortie (11) connecté électriquement à une extrémité desdites deuxièmes résistances (72),
**caractérisé en ce que**
ladite au moins une pluralité de diviseurs de courant (7) est intégrée dans ledit substrat semi-conducteur (3) sur lequel ladite pluralité de microcellules photosensibles (4) est disposée.

2. Dispositif photomultiplicateur selon la revendication 1, comprenant une surface sensible (2) munie d'une pluralité de microcellules photosensibles (4) agencée sous la forme d'une matrice de manière à définir une pluralité de colonnes (5) suivant une première direction X et/ou une pluralité de lignes (6) suivant une deuxième direction Y, et comprenant en outre:
- au moins une pluralité de diviseurs de courant (7) associée à ladite pluralité de colonnes (5) ou ladite pluralité de lignes (6) et intégrée dans ledit substrat semi-conducteur (3) sur lequel ladite pluralité de microcellules photosensibles (4) est disposée, dans une position adjacente à ladite pluralité de colonnes (5) suivant ladite première direction X ou dans une position adjacente à ladite pluralité de lignes (6) suivant ladite deuxième direction Y, dans lequel chacun desdits diviseurs de courant (7) est connecté électriquement à au moins une colonne de ladite pluralité de colonnes (5) ou à au moins une ligne de ladite pluralité de lignes (6), chacun desdits diviseurs de courant (7) comprenant une première résistance (71) et une deuxième résistance (72) de manière à obtenir une division dudit courant de type résistif, lesdites premières résistances (71) et lesdites deuxièmes résistances (72) de ladite pluralité de diviseurs de courant (7) ayant respectivement une valeur de conductance progressivement décroissante et progressivement croissante proportionnellement à la position de la colonne (5) ou de la ligne (6) à laquelle chacun desdits diviseurs de courant (7) est connecté électriquement en fonction d'un premier sens (A, B) suivant ladite première direction X ou suivant ladite deuxième direction Y;
- un premier canal de sortie (10) connecté électriquement à une extrémité desdites premières résistances (71) et un deuxième canal de sortie (11) connecté électriquement à une extrémité desdites deuxièmes résistances (72).

3. Dispositif photomultiplicateur (1) selon la revendication 2, dans lequel ladite pluralité de microcellules photosensibles (4) agencée sous la forme d'une matrice définit de manière exclusive ladite pluralité de colonnes (5) suivant ladite première direction X ou ladite pluralité de lignes (6) suivant ladite deuxième direction Y et dans lequel chacune desdites microcellules photosensibles (4) comprend une photodiode à avalanche (8) connectée en série à une résistance d'amortissement (9).

4. Dispositif photomultiplicateur (100) selon la revendication 2, comprenant une pluralité de microcellules photosensibles (4) agencée sous la forme d'une matrice de manière à définir une pluralité de colonnes (5) suivant ladite première direction X et une pluralité de lignes (6) suivant ladite deuxième direction Y, dans lequel les microcellules photosensibles (4) appartenant à la même colonne (5) sont connectées en parallèle entre elles et les microcellules photosensibles (4) appartenant à la même ligne (6) sont connectées en parallèle entre elles, comprenant:
- une première pluralité de diviseurs de courant (75) associée à ladite pluralité de colonnes (5) et intégrée dans ledit substrat semi-conducteur (3) sur lequel ladite pluralité de microcellules photosensibles (4) est réalisée, dans une position adjacente à ladite pluralité de colonnes (5) suivant ladite première direction X et une deuxième pluralité de diviseurs de courant (76) associée à ladite pluralité de lignes (6) et intégrée dans ledit substrat semi-conducteur (3) sur lequel ladite pluralité de microcellules photosensibles (4) est réalisée, dans une position adjacente à ladite pluralité de lignes (6) suivant ladite deuxième direction Y, dans lequel chaque diviseur de courant de ladite première pluralité de diviseurs (75) est connecté à au moins une colonne de ladite pluralité de colonnes (5) et chaque diviseur de courant de ladite deuxième pluralité de diviseurs de courant (76) est connecté à au moins une ligne de ladite pluralité de lignes (6), chacun desdits diviseurs de courant (75, 76) comprenant une première résistance (71) et une deuxième résistance (72) de manière à obtenir une division dudit courant de type résistif, lesdites premières résistances (71) et lesdites deuxièmes résistances (72) ayant respectivement une valeur de conductance progressivement décroissante et progressivement croissante proportionnellement à la position de la colonne (5) ou de la ligne (6) à laquelle chacun desdits diviseurs de courant (75, 76) est connecté électriquement en fonction d'un premier sens (A, B) suivant ladite première direction X ou suivant ladite deuxième direction Y;
- quatre canaux de sortie (10, 11, 14, 15), dans lequel le premier canal de sortie (10) est connecté à une extrémité desdites premières résistances (71) de ladite première pluralité de diviseurs de courant (75), le deuxième canal de sortie (11) est connecté à une extrémité desdites deuxièmes résistances (72) de ladite première pluralité de diviseurs de courant (75), le troisième canal de sortie (14) est connecté à une extrémité desdites premières résistances (71) de ladite deuxième pluralité de diviseurs de courant (76) et le quatrième canal de sortie (15) est connecté à une extrémité desdites deuxièmes résistances (72) de ladite deuxième pluralité de diviseurs (76).

5. Dispositif photomultiplicateur (100) selon la revendication 4, dans lequel chacune desdites microcellules photosensibles (4) comprend une photodiode à avalanche (8) connectée en série à une première et une deuxième résistance d'amortissement (91, 92), ladite première résistance d'amortissement (91) étant connectée en parallèle aux microcellules photosensibles (4) appartenant à la même colonne (5) et ladite deuxième résistance d'amortissement (92) étant connectée en parallèle aux microcellules photosensibles (4) appartenant à la même ligne (6).

6. Dispositif photomultiplicateur (100) selon la revendication 5, dans lequel ladite première et ladite deuxième résistances d'amortissement (91, 92) ont la même valeur résistive.

7. Dispositif photomultiplicateur (1, 100) selon l'une quelconque des revendications précédentes, dans lequel la valeur de la résistance équivalente de ladite première et ladite deuxième résistances (71, 72) en parallèle est la même pour ladite au moins une pluralité de diviseurs de courant (7, 75, 76).

8. Dispositif photomultiplicateur (1, 100) selon l'une quelconque des revendications précédentes, dans lequel chaque diviseur de ladite pluralité de diviseurs de courant (7, 75, 76) comprend une couche résistive (12) sur laquelle un espace (13) est créé de manière à définir ladite première et ladite deuxième résistances (71, 72), la longueur (L) et la largeur (W_{T}) de ladite couche résistive (12) et l'épaisseur (d) dudit espace (13) étant maintenues constantes pour ladite pluralité de diviseurs de courant (7, 75, 76) et la position dudit espace (13) sur ladite couche résistive (12) dépendant de la position dudit au moins un sous-groupe auquel ledit diviseur de courant (7, 75, 76) est connecté électriquement en fonction de ladite trajectoire prédéfinie.

9. Dispositif photomultiplicateur (1, 100) selon la revendication 8, dans lequel les largeurs des contacts électriques (16, 17) entre ladite première et ladite deuxième résistances (71, 72) de chacun desdits diviseurs de courant (7, 75, 76) et les canaux de sortie correspondants (10, 11, 14, 15) sont proportionnelles à la largeur de ladite première et ladite deuxième résistances (71, 72).

10. Dispositif photomultiplicateur (1, 100) selon l'une quelconque des revendications précédentes, dans lequel chacun desdits diviseurs de courant (7, 75, 76) comprend un premier et un deuxième condensateur (73, 74) de manière à obtenir une division dudit courant de type capacitif, ledit premier et ledit deuxième condensateurs (73, 74) étant connectés respectivement en parallèle à ladite première et ladite deuxième résistances (71, 72) et la valeur capacitive dudit premier condensateur (73) étant proportionnelle, avec une constante de proportionnalité K, à la valeur de conductance de ladite première résistance (71) et la valeur capacitive dudit deuxième condensateur (74) étant proportionnelle, avec ladite constante de proportionnalité K, à la valeur de conductance de ladite deuxième résistance (72).

11. Dispositif photomultiplicateur (1, 100) selon la revendication 10 en combinaison avec l'une quelconque des revendications 8 ou 9, dans lequel chacun desdits diviseurs de courant (7, 75, 76) comprend deux couches métalliques (18, 19) chevauchant ladite couche résistive (12) pour définir ledit premier et ledit deuxième condensateurs (73, 74), les largeurs dudit premier et dudit deuxième condensateurs (73, 74) étant respectivement proportionnelles aux largeurs de ladite première et ladite deuxième résistances (71, 72).

12. Dispositif photomultiplicateur (1, 100) selon l'une quelconque des revendications précédentes, dans lequel chacun desdits diviseurs de courant (7, 75, 76) est connecté électriquement à un unique sous-groupe de microcellules photosensibles (4).

13. Dispositif photomultiplicateur (1, 100) selon l'une quelconque des revendications 1 à 11, dans lequel un ou plusieurs desdits diviseurs de courant (7, 75, 76) sont connectés électriquement à au moins deux sous-groupes de microcellules photosensibles (4) connectés en parallèle entre eux.
